# EUROPEAN PATENT APPLICATION

(11) **EP 2 554 889 A1**
(43) Date of publication of application: **06.02.2013**
(21) Application number: 12005636.1
(22) Date of filing: 02.08.2012
(51) Int. Cl.: F16L 19/02

(54) **Plumbing adaptor fitting**

(30) Priority: 05.08.2011 AU 2011903123
(71) Applicant: ZETCO PTY LTD, Alexandria NSW 2015 (AU)
(72) Inventor: Michaels, Scott Alexander, Bondi NSW 2026 (AU)
(74) Representative: Busch, Thomas

(57) **Abstract**

The present invention discloses a plumbing adaptor fitting (51, 52, 53 or 54) for use in the installation of instantaneous gas hot water heaters (30). The adaptor fitting has one of four possible pipe couplings (55, 56, 57, 58) at one end and a releasably retained loose nut (67) at the other end. A bore (70) extends between the loose nut and the pipe coupling. The adaptor fitting has no joins or joints, facilitates both the installation and the replacement of such heaters, and is inexpensive to manufacture. The loose nut (67) is preferably releasably retained on the fitting by means of a flange (71) with machined opposite side edges. A valve (78, 88, 98), having only a single manufactured joint and a releasably retained loose nut (67) and retaining flange (71), is also disclosed.

## Description

The present invention relates to plumbing and, in particular, to the installation of plumbing appliances. The present invention is particularly relevant to installation by plumbers of instantaneous or continuous flow gas water heaters, however, the invention is not restricted to these particular plumbing appliances.

Instantaneous gas water heaters have become popular in recent years since they are particularly energy efficient and therefore economical to run. Since a large storage tank is not required, they are attractive to consumers because of reduced space requirements.

Australian Patent No. 2006 200 845, which is owned by the present applicant, discloses an isolation valve which is particularly useful for the connection of the cold water supply line and gas supply line for such heaters. The heater is manufactured with three threaded fittings which constitute inlets or outlets and which have male parallel threads. One of these fittings is the cold water inlet, the second is the gas inlet, and the third is the hot water outlet.

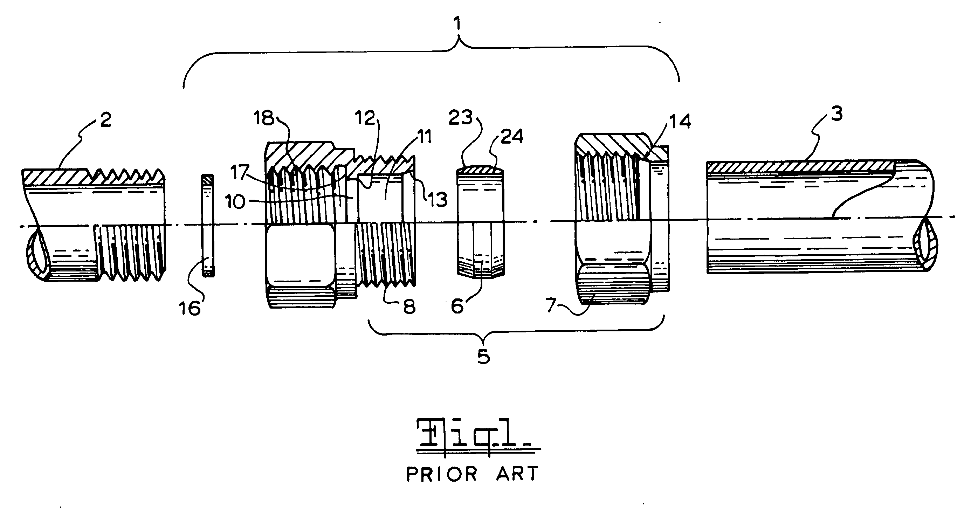

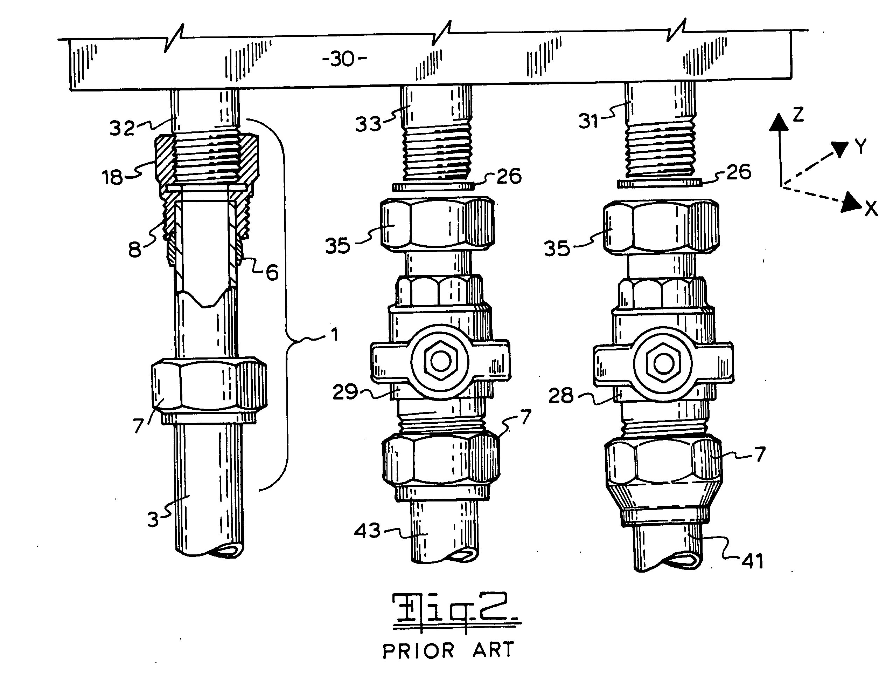

In recent times it has been known to provide a kit of three components which is sold to plumbers and which is intended to be used in the installation of such appliances. The kit takes the form of two of the valves of the general type described in the abovementioned patent together with an adaptor fitting which enables a connection to be made between the hot water outlet fitting on the appliance and a conventional copper pipe. The adaptor fitting is illustrated in Fig. 1 of the accompanying drawings and the two valves and the adaptor fitting are illustrated in Fig. 2 of the accompanying drawings.

The experience with this prior art adaptor fitting indicates that three problems, in particular, are likely to arise. The first problem is that the connection between the adaptor fitting and the hot water outlet of the heater can be prone to leaking. This leaking is thought to arise because the gasket or washer provided with the adaptor fitting is not fully compressed when the adaptor fitting is completely screwed onto the hot water outlet. The second problem is that although this potential leaking can be addressed by the use of thread sealing tape or thread sealant, the efficiency of the seal then is dependent, at least to some extent, upon the skill of the installing plumber.

The third problem, and perhaps the most important one, is that in the event that it is necessary to replace the heater, it is only possible to move the disconnected heater in a single direction (as will be explained hereafter in detail in relation to Fig. 2). This direction is normally upwards assuming that the supply pipes are vertically arranged so as to face the inlets and outlet which are positioned in the base of the heater. Since the heater is heavy and may be installed in a confined space, moving the heater upwardly is not always possible.

The genesis of the present invention is a desire to substantially overcome, or at least ameliorate to some extent, the three abovementioned problems.

In accordance with a first aspect of the present invention there is disclosed a plumbing adaptor fitting for coupling a male externally threaded inlet or outlet of an appliance to a pipe, said plumbing adaptor fitting comprising:
a body having a bore therethrough;
a loose nut sized to mate with said threaded inlet or outlet, and being releasably rotatably retained at one end of said body;
a sealing gasket for insertion in said nut to seal between said one end and said externally threaded inlet or outlet, and
a pipe coupling at the other end of said body.

Preferably the plumbing adaptor fitting is manufactured without any joins. Most preferably this is done by manufacturing the plumbing adaptor fitting as an integral unit, save for the loose nut or the pipe coupling compression nut, or olive or cone present in the pipe coupling.

The loose nut has an interior rim, the loose nut being releasably retained on the body by means of a flange on the body. The flange has two opposed machined edges and the flange selectively engages the interior rim of the loose nut. This facilitates the easy installation or mounting and, if desired, the subsequent removal of the loose nut from the fitting post manufacture. Further, this eliminates the prior art requirement to manufacture this type of adaptor fitting in two parts, the parts being joined together permanently after the installation or mounting of the loose nut and in turn enables an overall cost reduction in the manufacture of the fitting.

In accordance with a second aspect of the present invention there is disclosed a method of connecting a male externally threaded inlet or outlet of an appliance to a pipe, said method comprising the steps of:
(i) selecting a plumbing adaptor fitting having a loose nut at one end and a pipe coupling at the other end and being as defined as above;
(ii) connecting said loose nut and said male externally threaded inlet or outlet; and
(iii) connecting said pipe coupling and said pipe.

In accordance with a third aspect of the present invention there is disclosed a kit of parts for installing an instantaneous gas water heater, said kit including a plumbing adaptor fitting as defined above. Preferably the kit also includes two valves in accordance with the abovementioned patent.

Although the present invention arises in relation to an improved plumbing adaptor fitting, some of the benefits of the present invention are also applicable to the valves used in isolating the connected gas and water supply lines. In particular, the valves of the above-mentioned Australian patent incorporate two manufacturer implemented threaded joins. It is desirable to reduce the number of such joins because these increase the cost of manufacture. A single manufacturer implemented join is necessary to structurally connect the two parts of the valve housing. However, it is desirable that there should be no more manufacturer implemented threaded joins than this one.

In accordance with a further aspect of the present invention there is disclosed a valve for controlling gas or liquid flow, said valve having a valve housing, a quasi-sphere having a through hole therein, being rotatably mounted within the housing, and being connected via a spindle with a handle means to permit said quasi-sphere to be rotated, said valve housing having a through passage which at one end thereof terminates in a nut and tail fitting and the other end of which terminates in a pipe coupling, said nut and tail fitting having a loose nut with an interior rim, said nut being releasably retained on the valve housing by means of a flange on the valve housing having opposed machined edges, said flange selectively engaging said interior rim to thereby facilitate both mounting and removal of said loose nut on the tail.

Preferably the valve includes only one manufacturer implemented threaded join.

In accordance with yet another aspect of the present invention there is disclosed a method of installing an appliance having two male externally threaded inlets and one male externally threaded outlet, said method comprising the steps of:
(i) selecting a plumbing adaptor fitting having a loose nut at one end and a pipe coupling at the other end and being as defined above:
(ii) connecting said loose nut and said male externally threaded outlet;
(iii) connecting said pipe coupling to said pipe;
(iv) selecting two valves each having a loose nut at one end and a pipe coupling at the other end and being as defined as above; and
(v) for each valve connecting the loose nut and a corresponding one of said male externally threaded inlets.

Several embodiments of the present invention will now be described with reference to the drawings in which:
Fig. 1 is an exploded view of the prior art adaptor fitting, the upper portion of the drawing being illustrated in vertical cross-section, and the lower portion of the drawing being illustrated in side elevation;
Fig. 2 is a front elevation of a gas water heater, the adaptor fitting of Fig. 1 having been used in its installation, and the heater having being disconnected prior to being replaced with a new heater;
Fig. 3 is an exploded view of a plumbing adaptor fitting of a first embodiment, again the top half of the drawing being a vertical cross-sectional view and the lower half of the drawing being a side elevation, the adaptor having an olive compression pipe coupling;
Fig 4 is a front elevation of the flange of the adaptor fitting of Fig. 3 without the nut;
Fig. 5 is an elevation similar to Fig. 2 but illustrating the use of the plumbing adaptor fitting of Figs. 3 and 4;
Fig. 6 is a side view of a prior art tap connector such as that sold as " W62", again the top half of the drawing being a vertical cross-section and the lower half of the drawing being a side elevation;
Fig. 7 is a view similar to Fig. 6 but illustrating another prior art connector known as a "W68" straight union connector,
Fig. 8 is a view similar to Fig. 3 but of a plumbing adaptor fitting of a second embodiment having a flared compression pipe coupling
Fig. 9 is a view similar to Fig. 8 but of a plumbing adaptor fitting of a third embodiment having a CONETITE pipe coupling
Fig. 10 is a view similar to Fig. 9 but of a plumbing adaptor fitting of a fourth embodiment having a capillary pipe coupling
Fig. 11 is a side view of a valve of a first embodiment having a releasable loose nut, the top half of the drawing being a vertical cross-sectional view and the lower half of the drawing being a side elevation, the valve having an olive compression pipe coupling,
Fig. 12 is a view similar to that of Fig. 11 but illustrating a valve of a second embodiment having a flared compression pipe coupling,
Fig. 13 is a view similar to that of Fig. 11 but illustrating a valve of a third embodiment having a CONETITE pipe coupling, and
Fig. 14 is a schematic view of multiple water heaters having common isolation valves, each heater inlet and outlet having an adaptor fitting.

As seen in Fig. 1, a prior art adaptor fitting 1 is used to make a connection between the hot water outlet 2 and a conventional copper pipe 3. Typically both the hot water outlet 2 and the copper pipe 3 are ¾ inch (DN20 which is a nominal diameter (external) of 20mm). However, other pipe sizes are possible. For example a ½ inch (DN15) copper pipe can be connected to a ¾ inch (DN20) inlet or outlet. In accordance with normal Australian practice the size of each end of the fitting is determined by the nominal diameter (external) of the pipe with which that end of the fitting connects. However, the New Zealand practice, and the practice in some other jurisdictions, is to regard the internal diameter of the pipe as the nominal pipe or fitting size.

The adaptor fitting 1 has a conventional pipe coupling 5 which in the present case is an olive compression fitting which takes the form of a copper annular olive 6, a nut 7 and a male thread 8. The interior of the male thread 8 has a machined cavity 11 which terminates in a shoulder 12 and which has an internally chamfered opening 13. An equivalent internal chamfer 14 is provided on the nut 7 and these two chamfers 13, 14 mate with equivalent chamfers 23, 24 on the olive 6. All chamfers 13, 14, 23 and 24 have the same slope and the same diameter.

This conventional pipe coupling operates as follows. The nut 7 and olive 6 are slid onto the copper pipe 3 and the copper pipe 3 is inserted into the machined cavity 11 so that the end of the pipe 3 abuts the shoulder 12. Then the thread of the nut 7 is engaged with the male thread 8 so as to compress the olive 6 between the chamfers 13 and 14. In this way the internal diameter of the olive 6 is reduced and forms a seal with the exterior of the pipe 3.

The other end of the adaptor fitting 1 consists of a female thread 18 which is provided with an annular base 17. A washer or gasket 16 may be provided in some circumstances. The female thread 18 and the male thread 8 are positioned at either end of a through bore 10.

In plumbing fittings, two types of threads can be utilised - fastening threads or sealing threads. By definition and usage, "fastening" threads consist of a parallel male thread and a parallel female thread and the seal is intended to be effected by means of a washer or gasket. It is intended that no sealing tape or sealing compound is normally used with fastening threads. However, because of the poor quality and accuracy of many fastening threads, sealing tape or thread sealant is often used.

Conversely, "sealing" threads consist of a tapered male thread which engages with a parallel female thread, the seal being brought about by the metal to metal engagement of the tapered and parallel threads. However, general plumbing practice in Australia is that in order to ensure an effective seal, thread tape or a thread sealant compound is invariably used with sealing threads.

A first problem which arises with the adaptor fitting 1 of Fig. 1 is that the extent of the engagement between the parallel female thread 18 and parallel male thread of the hot water outlet 2, may be insufficient to compress the gasket 16 between the annular base 17 and the end of the hot water outlet 2. The efficiency of the seal cannot be assessed until the water is turned on and the system is pressurised to detect any leaks. This extent of thread engagement, and hence degree of gasket compression, if any, is very dependent upon the quality and machining accuracy of the two parallel threads. Because of this possibility of incomplete compression, it is necessary to use sealing tape, or thread sealant, on the threads of the hot water outlet so as to give some prospect of an effective seal between the hot water outlet 2 and the female thread 18.

The presence of both the gasket 16 and sealing tape or sealing compound, is a duplication of effort which is essentially inefficient and expensive. As a consequence, leaks can, and do, occur. Furthermore, if there is no leak, the plumber does not know which mechanism resulted in the success.

A second problem of the prior art adaptor fitting 1 illustrated in Fig. 1 will now be explained with reference to Fig. 2. As seen in Fig. 2, a conventional instantaneous gas water heater 30 has a gas inlet fitting 31, a hot water outlet fitting 32 and a cold water inlet fitting 33. Normally when viewed from the front, the hot water outlet fitting 32 is on the left, the gas inlet fitting 31 is on the right, and the cold water inlet fitting 33 is in the middle.

Isolation valves 28 and 29 as described in the abovementioned patent are installed onto the gas inlet fitting 31 and cold water inlet fitting 33 utilising the nut and tail fitting 35 of the valves 28, 29. The valves 28, 29 incorporate one of various types of pipe coupling which enable the valves to be connected to the gas pipe 41 and the cold water pipe 43.

In order to disconnect the heater 30, the nuts 35 of the valves 28, 29 are backed off so as to disengage same from the gas inlet 31 and cold water inlet 33. This provides an immediate disconnection between the valves and the inlets as illustrated, with the washer 26 which provides the seal between the valves and the inlets in each instance being shown clear of the nut 35 in Fig. 2 for clarity.

However, when it comes to disconnect the hot water outlet fitting 32 from the copper pipe 3, it is not possible to rotate the female thread 18 relative to the hot water outlet fitting 32 because the copper pipe 3 is fully inserted into the machined cavity 11 so that the end of the copper pipe abuts the shoulder 12. As a consequence, it is necessary to back off the nut 7 of the pipe coupling 5 which, as illustrated in Fig. 2, moves downwardly along the pipe 3 (assuming that the three pipes 41, 43 and 3 extend vertically as is normally the case).

It will be seen from Fig. 2 that the design of the compression pipe coupling requires the copper pipe 3 to be inserted into the machined cavity 11, and as a result it is not possible to move the heater 30 sideways or front ways in the horizontal XY plane indicated in Fig. 2. Instead, it is only possible to lift the gas heater 30 vertically upwards in the Z direction as indicated in Fig. 2. Whilst moving the heater 30 vertically upwards may be acceptable in some instances, in many instances the installation of the heater 30 is such that this single direction of movement is not available. Under these circumstances, it is necessary for the copper pipe 3 to be sprung or bowed so as to disengage its end from the machined cavity 11. This enables the gas heater 30 to be moved away in a direction in the horizontal plane. The plumber undertaking this manoeuvre runs the risk that the bowing of the copper pipe 3 results in a permanent deformation of the pipe. If such a deformation occurs, the pipe, or a length of the pipe, must be replaced.

Although not illustrated in Fig. 2, a similar problem in relation to bowing or springing of the pipe 3 occurs even if the adaptor fitting 1 were to be modified so as to use one of the other types of pipe couplings. That is, irrespective of whether the adaptor fitting 1 has an olive compression pipe coupling as illustrated, or a flared compression pipe coupling or a CONETITE type pipe coupling, because of an overlapping engagement between the pipe and the coupling, removal of the heater can only be achieved by moving the heater upwardly in the vertical direction. Thus movement of the heater in the horizontal plane is either impossible, or extremely difficult.

Once the existing heater 30 has been removed, it is then possible for the adaptor fitting 1 to be unscrewed from the hot water outlet 32 and reused by being screwed onto the hot water outlet 32 of the new heater which is to be installed. Because the heater is heavy, it is normally firstly installed onto the previous heater's existing mounting connections. It is then necessary for the pipe 3 to be sprung or bowed again (with its attendant risks) whilst the new heater has its inlets and outlet re-connected to the existing pipework. This requires the upper end of the copper pipe 3 to be re-seated in the pipe coupling of the adaptor fitting 1. Only then can the nut 7 be retightened onto the male thread 8 so as to re-compress the copper olive 6, or the equivalent tightening procedure be carried out for the other types of pipe coupling.

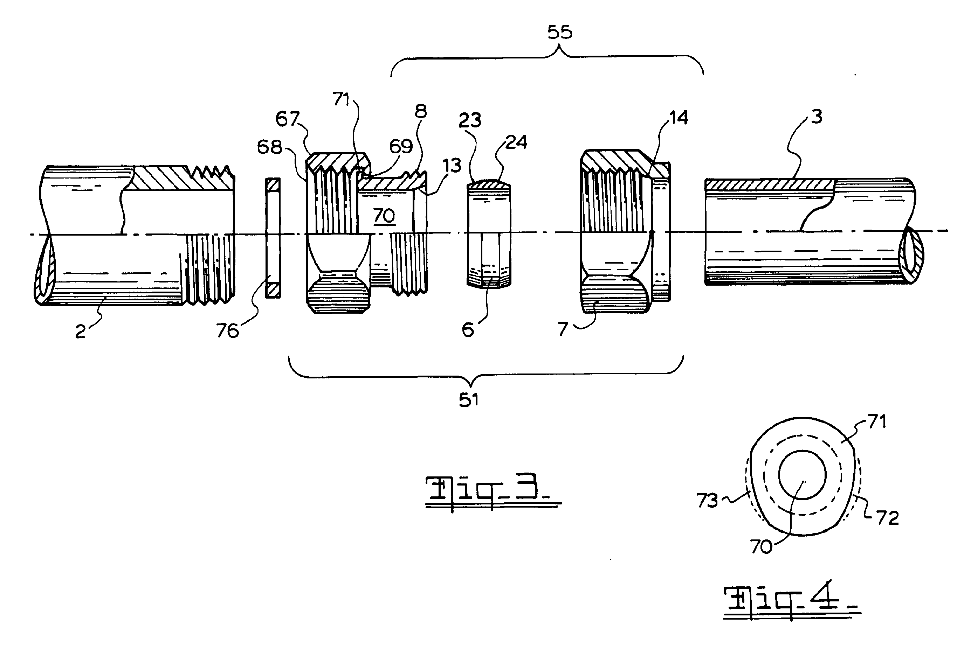

Turning now to Fig. 3, the plumbing adaptor fitting 51 of the preferred embodiment is illustrated, as are the hot water outlet fitting 2 and copper pipe 3 as before. The plumbing adaptor fitting 51 has a pipe coupling 55 at one end which, in this embodiment, takes the form of an olive compression coupling. The other end of the plumbing adaptor fitting 51 is provided with a loose nut 67 which has an internal female thread 68 and an interior annular rim 69. The adaptor fitting 51 has a through bore 70 which terminates in a flange 71.

The flange 71 mates with a washer or gasket 76 and, in addition, has an external diameter sufficient to cause the annular rim 69 to abut the flange 71 and thereby retain the loose nut 67 on the plumbing adaptor fitting 51. As illustrated in Fig. 4, the flange 71 is provided with two machined edges 72, 73 which enable the loose nut 67, when tilted at the correct angle, to be slipped onto the plumbing adaptor fitting 51. The loose nut 67 is only able to be slipped off the plumbing adaptor fitting 51 if the loose nut 67 is carefully aligned with the flange 71 so as to reverse the installation procedure. In practice, the loose nut 67 remains installed on the plumbing adaptor fitting 51.

The plumbing adaptor fitting 51 is easily installed onto the hot water outlet fitting 2 by engaging the threads 68 on the loose nut 67 with the thread on the hot water outlet fitting 2, thereby compressing the gasket 76 between the end of the hot water outlet fitting 2 and the flange 71. The length of the thread on the outlet fitting 2 always greatly exceeds the axial length of the loose nut 67. Thus an effective seal is able to be easily made without the use of any sealing tape or sealing compound. The efficiency of this seal is independent of the skill of the installing plumber since the loose nut 67 will always be tightened sufficiently to compress the gasket 76.

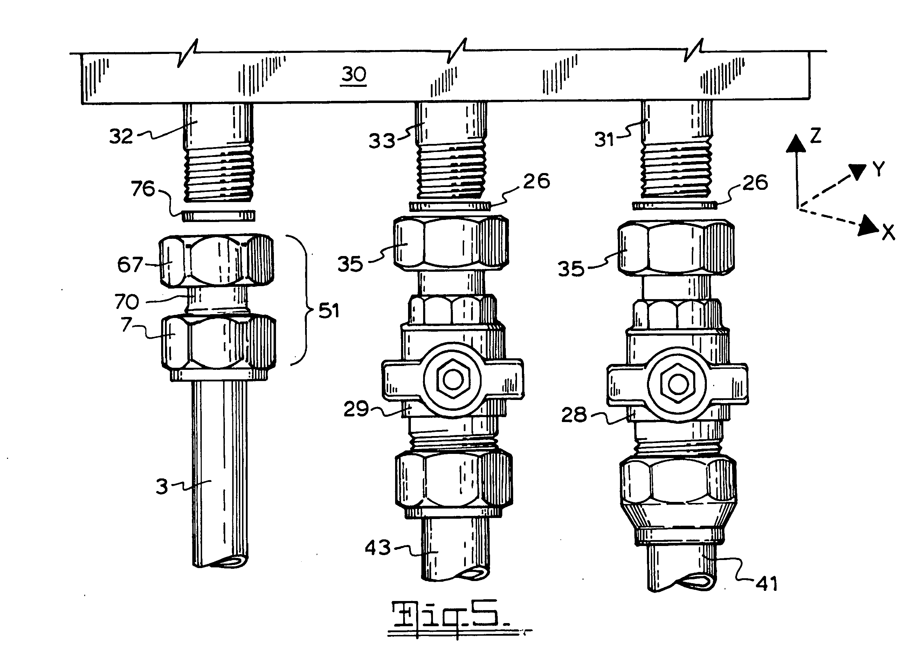

Turning now to Fig. 5, the advantages of the preferred embodiment will now be described in a manner similar to the description of Fig. 2. In Fig. 5, the gas heater 30, gas inlet 31, hot water outlet 32, cold water inlet 33, valves 28 and 29, and gas pipe 41, cold water pipe 43 and hot water outlet pipe 3 are as before. As before, in order to remove the gas water heater 30, the isolation valves 28 and 29 are closed and the loose nuts 35 of the nut and tail fittings thereof are backed off from the gas inlet fitting 31 and cold water inlet fitting 33 respectively. As before, the washers or gaskets 26 present between the inlets fittings 31, 33 and the valves 28, 29 are shown above the nuts 35 to render them visible.

Similarly, for the plumbing adaptor fitting 51, the loose nut 67 is backed off thereby disconnecting the pipe 3 from the hot water outlet fitting 32. The washer 76 between the plumbing adaptor fitting 51 and the hot water outlet fitting 32 is immediately freed. It will be apparent to those skilled in the plumbing arts, however, that for the arrangement illustrated in Fig.5, the gas water heater 30 can be moved not only in the vertical direction Z but also moved away in the horizontal plane defined by the XY axes illustrated in Fig. 5. As a consequence, the gas water heater 30 can be moved horizontally without lifting and without bowing or springing any of the pipes 3, 41 and 43. This greatly assists the ease both of removal of an old heater and the installation of a replacement heater.

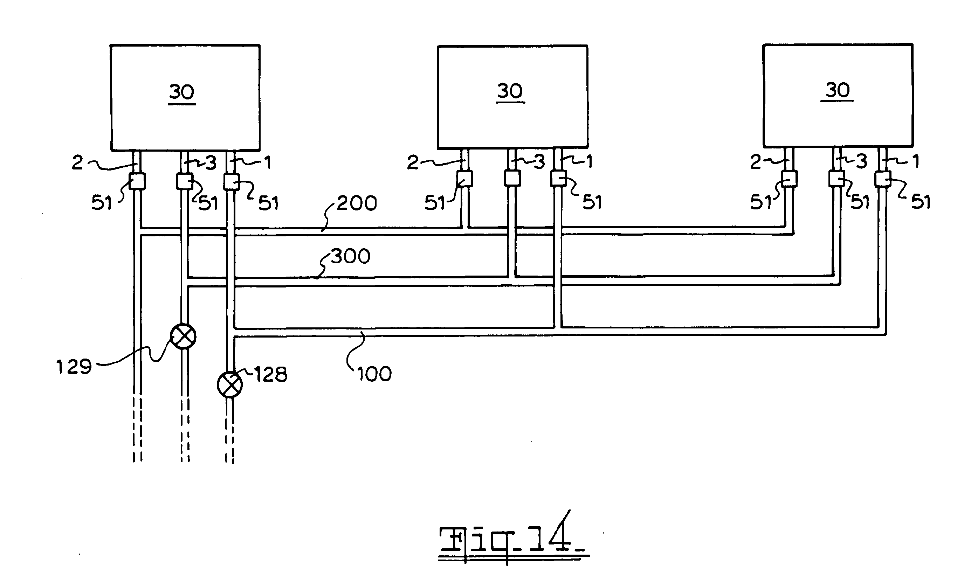

A further advantage of the arrangement illustrated in Figs. 3 and 5 is that the length of the plumbing adaptor fitting 51 from the front face of the compressed gasket 76 to the shoulder 12 (see Fig . 1) of the machined cavity 11, is fixed and known beforehand. As a consequence, the plumber is able to measure from the free end fitting 2 and determine exactly where to cut the pipe 3 to the correct length. This greatly simplifies the heater installation procedure. Furthermore, many plumbers do repeated installations and/or multiple installations as illustrated in Fig. 14, so the time and convenience efficiencies arising from this known fixed length accumulate.

Thus all the problems of the prior art described in relation to Figs. 1 and 2 are substantially overcome.

It will be apparent to those skilled in the plumbing arts that the two valves 28, 29 and the plumbing adaptor fitting 51 can be placed in a box or other container and sold as a kit.

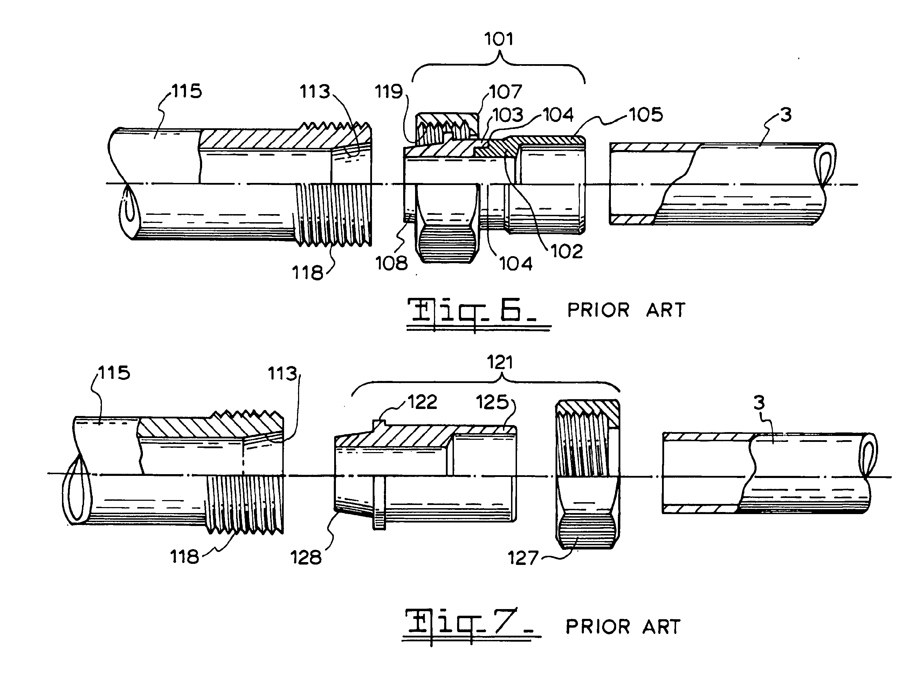

Now that the invention has been described and ascertained by the reader, two prior art plumbing fittings will now be described with reference to Figs. 6 ("W62") and 7 ("W68"). Fig. 6 illustrates a tap connector 101 which has a copper capillary coupling 105 at one end and a loose nut 107 at the other end. The tap connector 101 is fabricated in two parts 102, 103 which are brazed, or soldered, together during manufacture. As a consequence, there is an external joint 104 visible as a result of this manufacturing technique which is labour intensive and therefore expensive. It is necessary to manufacture the fitting in two parts, 102 and 103 to enable the installation or mounting of the loose nut 107 onto the part 103 prior to permanently joining the two parts.

The part 103 is provided with a frusto-conical spigot 108 which mates with a corresponding tapered opening 113 of a machined outlet 115. The machined outlet 115 has external threads 118 which engage with the internal threads 119 of the nut 107. The engagement of the threads 118, 119 draws the spigot 108 into metal to metal contact with the tapered opening 113 thereby bringing about a metal to metal seal. It will be apparent to those skilled in the plumbing arts that the tap connector 101 is of no use in relation to gas heaters, and equivalent appliances, because the hot water outlet fitting 32, for example, does not have any tapered opening 113.

Turning now to Fig. 7, a similar prior art device in the form of a straight union connector 121 is illustrated. The connector 121 has a loose nut 127 which slides over a capillary fitting 125. The loose nut is unrestrained and thus is liable to get lost or misplaced prior to any attempted installation or use. The connector 121 has an exterior annular flange 122 and a spigot 128 which is essentially the same as the spigot 108 of Fig. 6. The machined outlet 115 is as in Fig. 6 also. Thus the seal between the spigot 128 and the machined outlet 115 is as in Fig. 6. As was the case with Fig. 6, it will be apparent to those skilled in the plumbing arts that the straight union connector 121 of Fig. 7 is of no assistance in relation to hot water services since the appliance does not have an inlet or outlet with a machined taper 113.

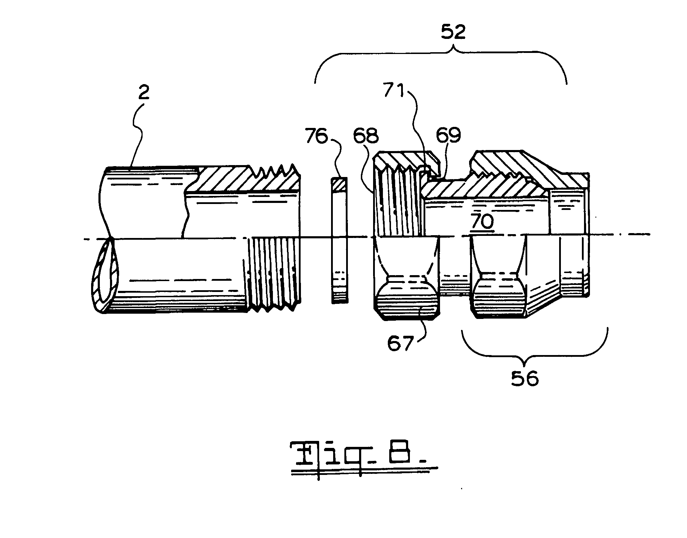

Prior art searches conducted after the priority date have disclosed US Patent Applications Nos. 2011/0115220A1 (Kuo) and 2009/0146418A1 (Noto et al). The former is a substantially conventional barrel union with an interior seal. The latter is of more relevance but is difficult to fabricate since the loose nut 20 must be placed over the partially fabricated device before the pipe coupling (19, 22, 24) is created. In addition to this complication, the loose nut 20 is not releasably retained but is, as a consequence of the construction, permanently retained on the device.
It will also be apparent to those skilled in the art that the plumbing adaptor fitting 51 of the first embodiment can be provided with any of various types of pipe coupling 55 which are known. This includes the olive compression coupling as actually illustrated in Fig. 3, and also a flared compression coupling, a CONETITE coupling, and a copper capillary coupling, all of which are known to the person skilled in the plumbing arts. These thee embodiments are respectively illustrated in Figs. 8 - 10 as adaptor fittings 52, 53 and 54 respectively.

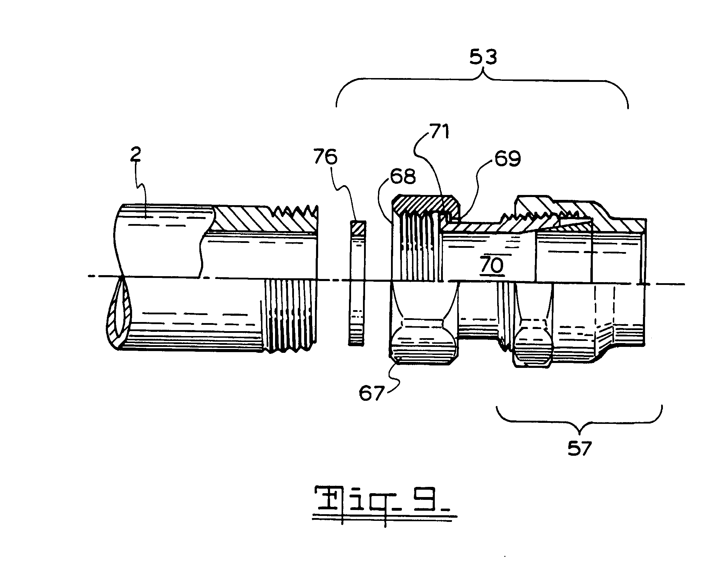

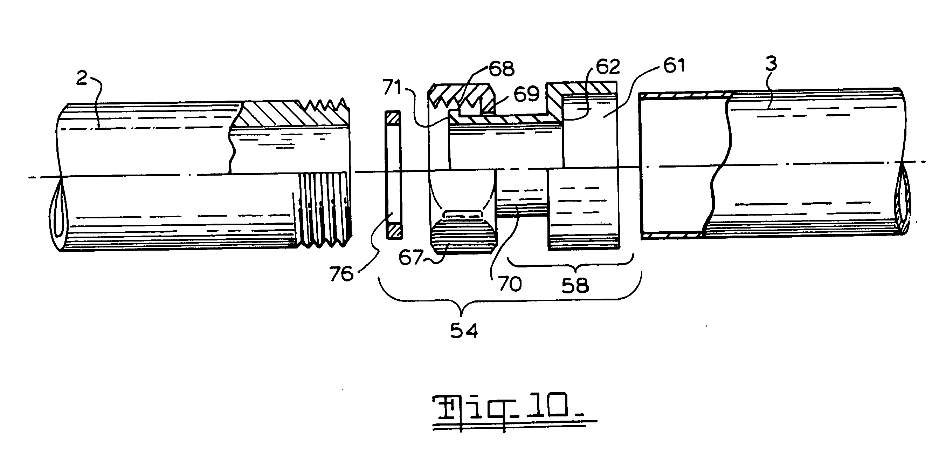

In Figs. 8, 9 and 10, the outlet fitting 2, loose nut 67, thread 68, annular rim 69, bore 70, flange 71 and washer 76 are as in Fig 3. What is different is that in Fig. 8 the pipe coupling 56 is a flared compression coupling, in Fig. 9 the pipe coupling 57 is a CONETITE coupling, and in Fig. 10 the coupling 58 is a copper capillary coupling. In Figs. 8 and 9, the pipe couplings 56 and 57 are shown with the compression nuts screwed onto the fitting to indicate how the plumbing adaptor fitting is normally presented for sale.

The copper capillary coupling 58 of Fig. 10 is formed by a machined cavity 61 having a shoulder 62. The copper pipe 3 is inserted into the machined cavity 61 so that the end of the copper pipe 3 abuts the shoulder 62 and then the plumbing adaptor fitting 54 and the copper pipe 3 are brazed or silver soldered together. The plumbing adaptor fitting 54 is able to be used together with a copper capillary coupling 58 since the loose nut 67 means that the adaptor 54 never needs to be disconnected from the pipe 3.

A particular advantage of the loose nut 67 and flange 71 is that the body of the adaptor 51-54 can be fabricated in a single piece. This means that there are no manufacturer implemented threaded joins or joints in the body of the adaptor.

In the above-mentioned Australian patent, the housing of the valve includes two manufacturer implemented threaded joins. The first of these is the structural threaded join which brings together the two parts of the valve housing. The second of these manufactured joins occurs with the screwed connection of the tail of the loose nut and tail. The loose nut is placed on the tail and then the tail is screwed into the valve. This permanently retains the loose nut of the nut and tail fitting.

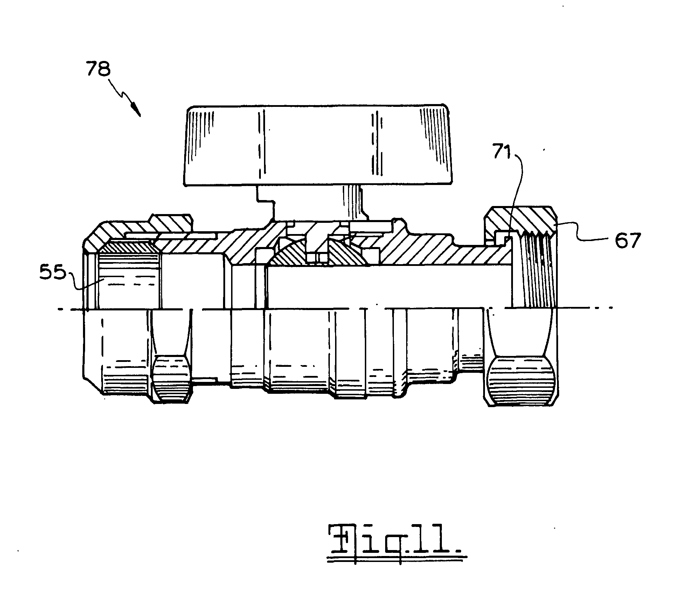

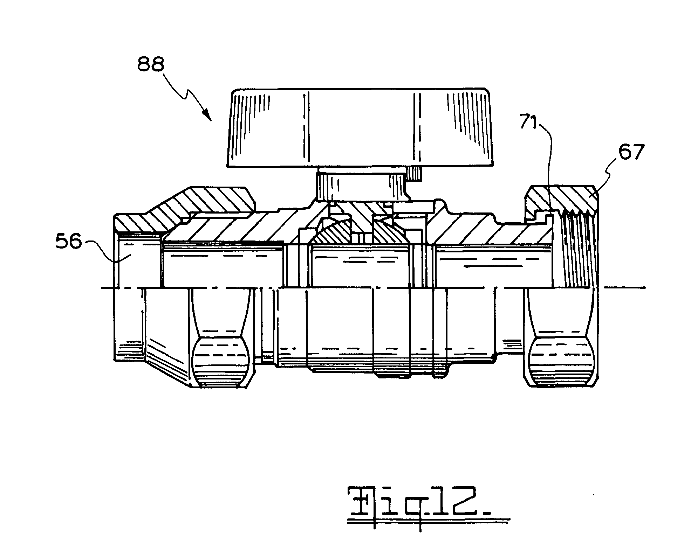

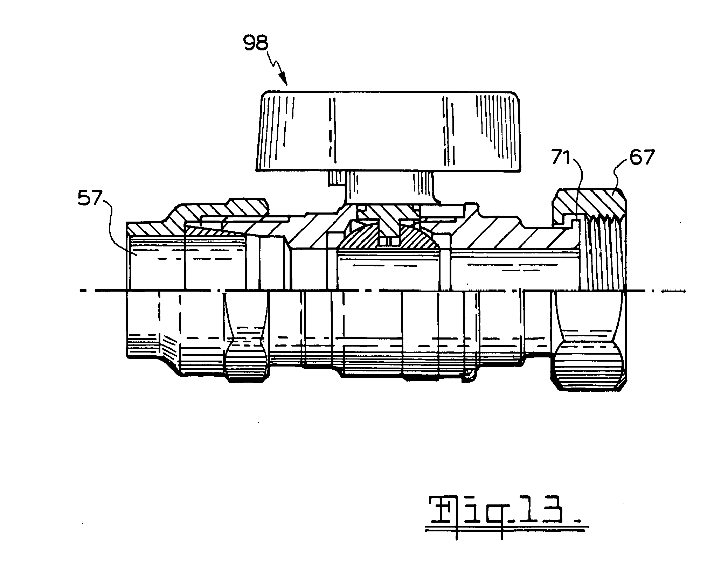

The above-mentioned loose nut 67 and flange 71 arrangement can be applied to the valves of the above-mentioned Australian patent, so as to eliminate this second manufacturer implemented threaded join. Figs. 11-13 respectively illustrate three different valve embodiments 78, 88 and 98 each having such a loose nut 67 and flange 71 and having different mechanical pipe couplings which are respectively an olive compression coupling 55, a flared compression coupling 56, and a CONETITE compression coupling 57. A copper capillary coupling is not recommended for a valve since the heat involved in brazing or silver soldering may well render the internal O-rings of the valve inoperable, or of reduced life expectancy. Since for the valves 78, 88 and 98 this second manufacturer implemented join is eliminated, the cost of manufacturing the valves of Figs. 11-13 is reduced.

The above description has been in relation to a single heater which requires two valves and one plumbing adaptor fitting. However, in some commercial applications, a number of heaters are connected in parallel or via a manifold. Such an arrangement is illustrated in Fig. 14 where three heaters 30 are provided and all are controlled by means of two conventional in-line valves 128,129. Under these circumstances, all the inlet and outlet fittings 1, 2, 3 are connected to a corresponding plumbing adaptor fitting 51-54 (the choice of plumbing adaptor fitting will be dictated by whether the connection is for gas 52 and 54 or water 51-54 inclusive). In this case, the three heaters 30 require only two valves but nine plumbing adaptor fittings. Accordingly, whilst with a single heater the plumbing adaptor fitting 51-54 is connected to the hot water outlet only, with multiple heaters the plumbing adaptor fittings 51-54 can be connected to gas or cold water inlet fittings as appropriate.

The foregoing describes only some embodiments of the present invention and modifications, obvious to those skilled in the arts, can be made thereto without departing from the scope of the present invention.

For example, the plumbing adaptor fittings 51-54, can be provided with a plastic cap to retain the washer 76 within the loose nut 67. The cap is discarded at installation. Preferably the plumbing adaptor fitting complies with the requirements of Australian Standard AS 3688 and the valves comply with the requirements of Australian Standard ATS 5200.012 (or equivalent water standard) and/or AS 4617 (or equivalent gas standard).

Furthermore, it should be understood that the present applicants have a very detailed knowledge of the Australian plumbing industry. Accordingly, the reference to prior art valves or fittings referred to herein, does not necessarily mean that other persons in the plumbing industry are aware of this prior art, nor does it mean that such prior art is sufficiently well known to constitute common general knowledge in the plumbing industry.

The foregoing describes four known types of pipe coupling, however, in the future other types of pipe coupling such as those which include a press connection may find wide application and are intended to be included in the term "pipe coupling".

The term "comprising" (and its grammatical variations) as used herein is used in the inclusive sense of "including" or "having" and not in the exclusive sense of "consisting only of".

## Claims

1. A plumbing adaptor fitting for coupling a male externally threaded inlet or outlet of an appliance to a pipe, said plumbing adaptor fitting comprising:
a body having a bore therethrough;
a loose nut sized to mate with said threaded inlet or outlet, and being rotatably retained at one end of said body;
a sealing gasket for insertion in said nut to seal between said one end and said externally threaded inlet or outlet, and
a pipe coupling at the other end of said body, and
**characterised in that** said loose nut is releasably retained on said body.

2. The plumbing adaptor fitting as claimed in claim 1 and being integrally formed save for said loose nut and any nut or component (known per se) present in said pipe coupling.

3. The plumbing adaptor fitting as claimed in claim 1 or 2 wherein said loose nut has an interior rim, said nut being releasably retained on the valve housing by means of a flange on the valve housing having opposed machined edges which selectively engage said interior rim to thereby facilitate both mounting and removal of said loose nut.

4. The plumbing adaptor fitting as claimed in any one of claims 1 to 3 wherein said loose nut and said pipe coupling are sized to connect said inlet or outlet of one size to said pipe of the same size.

5. The plumbing adaptor fitting as claimed in any one of claims 1 to 3 wherein said nut and said pipe coupling are sized to connect said inlet or outlet of one size to said pipe of a different size.

6. The plumbing adaptor fitting as claimed in any one of claims 1 to 5 wherein the internal diameter of said inlet or outlet, said pipe and said bore are all substantially equal.

7. A kit of parts for installing an instantaneous hot water service, said kit including a plumbing adaptor fitting as claimed in any one of claim 1 to 6.

8. A kit of parts as claimed in claim 7 and including a pair of valves.

9. A valve for controlling gas or liquid flow, said valve having a valve housing, a quasi-sphere having a through hole therein, being rotatably mounted within the housing, and being connected via a spindle with a handle means to permit said quasi-sphere to be rotated, and said valve housing having a through passage which at one end thereof terminates in a loose nut and tail fitting and the other end of which terminates in a pipe coupling, **characterised in that** said loose nut and tail fitting has a loose nut with an interior rim, said nut being releasably retained on the valve housing by means of a flange on the valve housing having opposed machined edges, and said flange selectively engaging said interior rim to thereby facilitate both mounting and removal of said loose nut on the tail.

10. The valve as claimed in claim 9 wherein said valve includes a single manufacturer implemented join.

11. A method of connecting a male externally threaded inlet or outlet of an appliance to a pipe, said method comprising the steps of:
(i) selecting a plumbing adaptor fitting having a loose nut at one end and a pipe coupling at the other end and being as claimed in any one of claims 1-6;
(ii) connecting said loose nut and said male externally threaded inlet or outlet; and
(iii) connecting said pipe coupling and said pipe.

12. The method as claimed in paragraph 11 wherein said appliance has two inlets and one outlet and said selected plumbing adaptor fitting is connected between said outlet and said pipe.

13. The method as claimed in paragraph 12 wherein said appliance has two inlets and one outlet, a said selected plumbing adaptor fitting is connected between said outlet and said pipe, and two of said selected plumbing adaptor fittings are connected one between each of a corresponding one of said inlets and a corresponding one of two additional pipes.

14. A method of installing an appliance having two male externally threaded inlets and one male externally threaded outlet, said method comprising the steps of:
(i) selecting a plumbing adaptor fitting having a loose nut at one end and a pipe coupling at the other end and being as claimed in any one of claims 1-6:
(ii) connecting said loose nut and said male externally threaded outlet;
(iii) connecting said pipe coupling to said pipe;
(iv) selecting two valves each having a loose nut at one end and a pipe coupling at the other end and being as claimed in claim 9 or 10; and
(v) for each valve connecting the loose nut and a corresponding one of said male externally threaded inlets.
